# EUROPEAN PATENT SPECIFICATION

(11) **EP 3 255 596 B1**
(45) Date of publication and mention of the grant of the patent: **31.07.2024**
(21) Application number: 17174860.1
(22) Date of filing: 07.06.2017
(51) Int. Cl.: G06Q 10/08

(54) **METHOD AND APPARATUS FOR COLLECTION OF ITEMS FROM A STORE**
VERFAHREN UND VORRICHTUNG ZUM SAMMELN VON GEGENSTÄNDEN VON EINEM LADEN
PROCÉDÉ ET APPAREIL POUR LA COLLECTE D'ARTICLES D'UN MAGASIN

(30) Priority: 07.06.2016 GB 201609965
(43) Date of publication of application: 13.12.2017
(73) Proprietor: ByBox Holdings Limited, Oxfordshire OX11 0EY (GB)
(72) Inventor: TURNER, Daniel Robert, Oxfordshire OX11 0EY (GB); FINCH, Steven Caffall, London EC3A 5AR (GB)
(74) Representative: Finch, Steven Caffall

(56) References cited:
- WO-A1-2016/068808
- US-A- 5 886 634
- US-A1- 2011 320 322
- US-B1- 6 762 681
- US-B1- 7 693 758

## Description

This invention relates to automated systems for facilitating the collection of items, particularly although not exclusively items that have been purchased by a customer from a retail store.

In this specification, an item can be any portable physical object, whether packaged or not. A packaged item could be for example a small electrical appliance or a piece of clothing contained in a box or wrapper, a packet containing a quantity of food or non-food items, a bottle of wine, or a tub containing a quantity of paint or a frozen foodstuff. A non-packaged item could be for example a banana or a wheelbarrow.

When items are offered for sale via a retail store, it is common to provide for a customer of the store to select and purchase the items without having to walk around and collect them from the store. For example, a customer may order goods via a website associated with the store, or may place an order by telephone. The items will then be selected by staff at the store or in a warehouse associated with the store. The customer may complete the purchase transaction in advance of collecting the items, or later on visiting the store.

It is known for items purchased in this way to be transported and delivered either to the customer's residence or to a secure electronically controlled locker from which the customer may collect the goods at any convenient time.

However, it is often more convenient for the customer to collect the goods when visiting the store. For example, the customer may wish to order some clothing or electrcical goods from the store's online catalogue, and then pick them up when visiting the store for regular groceries. Alternatively the customer may visit the store regularly, but may wish to order and pay for their groceries or other goods online to save time when they visit the store at busy times.

A large retail store may therefore keep a substantial inventory of pre-purchased items for collection by its customers from the store.

In order to facilitate the collection of such items, it is known to arrange an assembly of automatic delivery and collection lockers in a convenient location inside or outside the store, and to arrange for each customer to access the locker containing their goods by inputting their personal identification and/or a unique collection code at an automated controller. However, in order to avoid disappointing customers at busy times, it is necessary to provide sufficient lockers to contain the entire inventory of goods during periods of peak demand, such as before a public holiday. This is expensive and reduces the floor space available for retail display.

It is also possible to hold the goods in a store room and bring them out manually for each customer. However, this increases the staffing requirement.

US 2013/312371 discloses a "pick-to-light" or "pick-to-voice" system for picking multiple items in a warehouse, wherein the location of each selected item is illuminated or indicated by an audible signal to guide the worker to the item.

US2015/192774 discloses a head mounted display unit with a camera for use by a picker in a warehouse. The unit locates an item to be picked based on a code displayed on an aisle or racking location, or alternatively by a shape or surface design of the article. The display provides an image captured by the camera, in which the article is outlined in red so that the worker can easily find it, and indicates to the user whether a correct or incorrect item has been picked.

WO2016/068808A1 describes an item retrieval guide system that does not involve any physical barrier. It indicates to a user the correct compartment amongst multiple compartments to retrieve an item and feedbacks via an alarm should the user retrieve an item from a wrong compartment. The system can also distinguish an authorized and unauthorized person depositing and retrieving the item.

The object of the present invention is to provide a more convenient means whereby customers, e.g. of a retail store, may collect their pre-purchased items.

Accordingly the present invention provides an apparatus and a method for facilitating the collection of an item by a user, as defined in the claims.

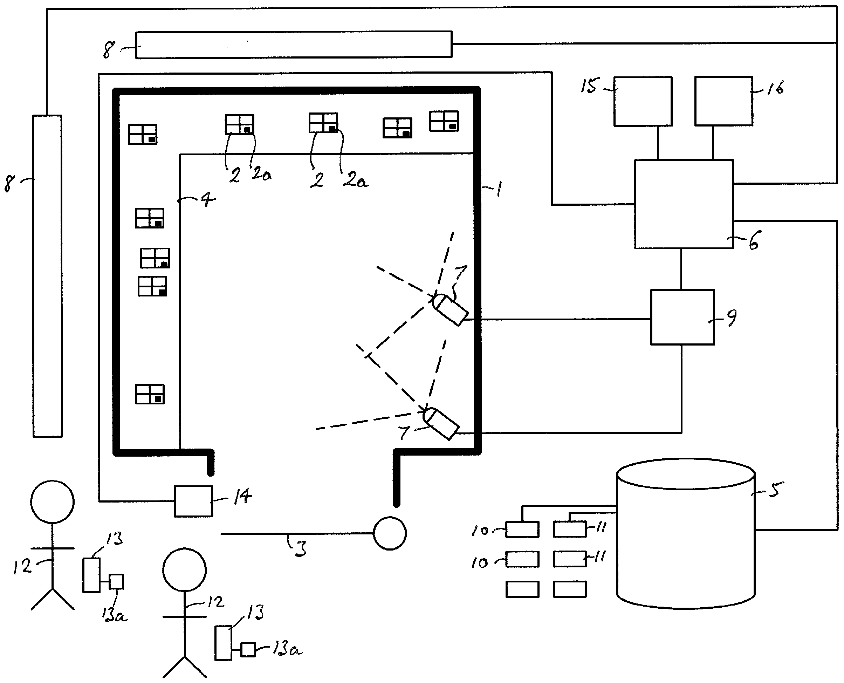

Further features and advantages will be evident from the illustrative embodiments of the invention which will now be described, purely by way of example and without limitation to the scope of the claims, and with reference to the accompanying drawing, which shows elements of a first example apparatus in accordance with a first embodiment.

Referring to the drawing, the apparatus comprises a repository 1, controlled by repository staff, which may be arranged within a retail store, and may be an open repository, for example, an area of shelving arranged so that the items in the repository are accessible by customers of the store including but not limited to the group of users who are authorised to collect the items. (It will be understood of course that the repository staff are not included among the customers or the users who collect the items from the repository.) Alternatively the repository may be a secure room with a door that is opened responsive to receiving a user input from an authorised user. Alternatively the repository may be a semi-secure area, for example, comprising open shelving located behind a barrier 3 which provides an indicative boundary with minimal physical security, the barrier being openable responsive to receiving a user input from an authorised user.

The repository may comprise shelves arranged to provide open compartments (defined for example by four sides and an open front aperture) with indicia to guide the user to the correct compartment, or simply open shelving so that items can be placed anywhere on the shelving.

Each of a plurality of items 2 is arranged in the repository (e.g.. on the shelves 4 or in the compartments) for collection by a respective user from a group of users. Since the items in the repository are not individually enclosed with individual secure doors or the like, each of the items in the repository is accessible by each of the authorised users. Which is to say, a user authorised to collect one of the items can physically access any of them within the repository.

Since the repository is simply an arrangement of open shelves or compartments, it is very easy to adapt the repository to accommodate the level of demand for items purchased in advance for collection from the store.

The repository is managed by computer system including a processor (or processor array) 6 and an item memory 5 which is arranged to store an item identity (item ID) 10 of each item 2 in the repository in association with a user identity (user ID) 11 of a respective one of the users 12 who is authorised to collect the item.

The memory 5 may be populated with user IDs and item IDs for example by a conventional transaction system of the retail store which stores user IDs in a customer database and associates each user ID with an item ID when that user orders (and either pays for or arranges to subsequently pay for) an item, e.g. via a retail website of the store, over the telephone, by an automatic replenishment ordering system integrated e.g. into the customer's refrigerator or the like, or via some other ordering system provided by the store. When the user orders an item, the item is picked and placed on the shelf 4 by staff at the store, and the item ID is stored in the memory 5 in association with the user ID of the customer who has ordered it.

A user ID or an item ID may be any data item which identifies or uniquely identifies the user or the item, and may be stored and embodied in more than one form, e.g. as a barcode, smartcard, data packet, etc. Each user ID may be unique to the user. Each item in the repository may also have a unique item ID. Alternatively, at least some of the items in the repository may share a common item ID (e.g. an SKU). For example, if several customers order identical shirts, the staff may put a pile of seven shirts on the shelf, each with an identical item ID, so each customer who has ordered a shirt is authorised to collect any one (but not more than one) of them.

Each user may have a portable device 13 such as a smartphone or other portable computing device with near field (e.g. Bluetooth (RTM)) wireless communications capability. Each portable device may have a unique device identity (e.g. telephone number or hardware identification code) which may be stored in the memory 5 in association with the respective user ID 11, or alternatively which may be used as the user ID 11, so that when the processor receives a user input from the portable device it can identify the user ID of the respective user. A program 13a, hereinafter referred to as an app, may be downloaded by the customer so that an instance of the app runs on each device 13.

A user input means 14 is provided for receiving a user input from a user 12 at the repository to identify the user identity 11 of the user. The user input means may be for example a touchscreen device or any other input means located at the repository so that a user input received via the means 14 indicates that the user is present at the repository. The user input means may also be a cellular telephone transceiver or a near field transceiver for receiving a transmission from the user's device 13 or the app 13a running on it.

The user input means may be arranged to determine when the user is present at the repository, for example, by the limited range of the near field transceiver or alternatively by an input from the app 13a running on the device 13, the app 13a being configured to respond to an input, e.g. by reading a tag 2a on an item 2 in the repository, or from a beacon or another local signal or identification means present at the repository, to indicate that the user is present at the repository. The app 13a may thus be configured to generate the user input (optionally, responsive also to being initiated by the user via a button or the like on his device 13) to identify the user as present at the repository.

Optionally, the app 13a may generate the user input when the item identity 10 of the item stored in the item memory in association with the respective user is read by the program from a tag 2a on the item, as follows.

A surveillance means is provided for identifying the item identity 10 of each of the items in the repository (which is to say, identifying the physical presence of the item so as to verify that it corresponds to the item identity 10 stored in the item memory).

The surveillance means is arranged to receive from each of the items in the repository a surveillance input signal, and based on the surveillance input signal received from the respective item, to identify the corresponding item identity stored in the item memory, and an item location of the respective item within the repository.

The surveillance input signal could be an optical signal based for example on the shape or surface appearance of the article, or a visible indicium printed on a tag (e.g. a barcode) on the article, or could be a non-optical signal read from a (magnetic, radio frequency, or other) tag in or on the article. In each case however the surveillance input signal is received from the article (which is to say, either the purchased goods or their packaging or a tag forming part of the purchased goods), and not from a shelf or racking location. Advantageously, this makes it possible for the repository staff to arrange the items anywhere in the repository. Preferably the item location of each item is freely selectable by repository staff at any arbitrary spatial location within the repository, and the surveillance means is arranged to define a plurality of item locations in any arbitrary spatial configuration within the repository.

In the illustrated example, a first surveillance means includes one or more cameras 7 together with an image processor 9, for receiving an optical surveillance input signal from the item, and a second surveillance means comprising one or more tag readers (e.g. RFID tag readers) 8 for receiving a surveillance input signal from a tag in or on the item. In alternative embodiments only one of these surveillance means, or other surveillance means, could be provided.

In the illustrated example, each item 2 is provided with a tag 2a encoded with the item ID 10, and the tag readers 8 are arranged to read the item ID from the tag as a surveillance input signal.

Each camera 7 is also arranged to receive a surveillance input signal from each item in the repository, comprising an image of the respective item, and to generate a corresponding image output signal. The image processor 9 is arranged to receive the image output signal from the camera, to process the image data to identify entities within the image, and to associate the item identity 10 of each item 2 in the repository with an entity embodied in the image, and to provide the alarm responsive to a change in the respective entity.

Advantageously, as further described below, the surveillance means may receive via a staff input means an input from a repository staff member who deposits an item in the repository. The input indicates or confirms the item identity of the deposited item. The surveillance means (e.g. camera or tag reader array) also receives from the deposited item an initial surveillance input signal, and associates the item identity of the deposited item with the initial surveillance input signal. In this way, an item may be conveniently placed anywhere in the repository and checked in by a repository staff member.

The surveillance means is arranged, when the item is deposited in the repository by the repository staff member, to identify the item location of the deposited item within the repository based on the initial surveillance input signal received from the item, and to store the item location in association with the item identity in the item memory. The stored item location can later be used to guide the authorised user to collect the item, or to help monitor the presence of the item in the repository.

Optionally, where the item location is identified and stored in memory based on the initial surveillance input signal, the surveillance means may be arranged to identify the item in the repository by comparing a subsequent surveillance input signal received from the item with the item identity and the item location stored in the memory. This provides a higher degree of confidence in correctly identifying the item.

For example, where the surveillance means is a camera and image processing system, the image entity may be associated with a higher level of certainty with the corresponding item identity originally stored in association with that image entity based on the initial surveillance input signal. Of course, if the item is later displaced, the item may be identified again by the surveillance means and re-associated with a slightly (or very) different location in the repository - for example, if it was accidentally picked up or dropped by another customer. In this way, an image processing system can be made to work more effectively in a dynamic environment by providing an initial cue to associate an image entity with a location and an item identity.

In alternative embodiments, the item location need not be identified based on the initial surveillance input signal, but only later in a subsequent surveillance input signal which is used to guide the authorised user to collect the item.

For example, as further discussed below, where the surveillance input signal is a signal from a radio frequency (RF) or other tag in or on the item, it may include a first surveillance input signal received via tag sensors in the repository which generates the alarm responsive to unauthorised removal of the item, but which need not identify the item location; and a second surveillance input signal received via the user's mobile device which is processed by the program running on the device to identify the location of the item within the repository and guide the authorised user to the item, e.g. by signal strength. Alternatively or additionally, the tag sensors in the repository may also identify the item location from the first surveillance input signal, e.g. by an array of two or more directional antennae, by signal strength, or otherwise as known in the art.

In the illustrated embodiment, the identification of the entities in the image could be done for example by a staff member who provides an input via a staff handheld device to verify that an item placed in the image field of the cameras within the repository corresponds to an item ID on a list. So for example, some shirts have been purchased online for collection by various customers, and are picked from stock by a staff member who takes them to the repository. The staff member puts a shirt on the shelf. If an illumination means is used, then the illumination means may illuminate the new item when it is recognised by the image recognition system. If the staff member has put the item too close to another item so as to obscure it from the cameras then the processor 6 may send a message to the handheld device to indicate to the staff member to move the item further away. The processor 6 sends a message to the staff handheld device : "identify item". The staff member selects a shirt from a list displayed on the staff handheld device and presses "enter". Alternatively the staff member may scan a barcode or tag 2a on the item. Alternatively the staff member may input a customer identifier associated with the purchased item. The processor looks up the input data and sends a message to the handheld device : "this item is a man's shirt blue collar size 14, SKU xxxxxx. Confirm?" The staff member presses "confirm" and the image entity record is associated with the item ID in the item memory. The processor looks up a list of customers who have purchased that shirt for collection from the repository, and stores the image entity record, the item ID, and the respective user ID in association in the item memory 5. A message can also be sent to the customer, e.g. via his device 13, using the telephone number stored in association with his customer ID 11 : "your shirt is ready for collection from the Area D in the repository." Alternatively, the staff member could input the item details first, and then place the item in the repository, and then provide the processor 6 with a confirmation to associate the sensed item with the details previously input. Optionally, the image processor could match images to a stock inventory and suggest a list of items, or refuse to associate the new entity with entity details that don't match.

A signal means 16 is also arranged to provide an identification signal to identify to each one of the users a respective one of the items 2 which the user is authorised to collect. The identification signal also guides the user within the repository to the item location identified from the surveillance input signal.

For example, the signal means may include an illumination means for selectively illuminating an item to be collected from the repository, so that the user can both identify and locate it within the repository. The illumination means may be directable (e.g. using a motorised light emitter, mirror or lens arrangement or the like) responsive to the respective item location based on the surveillance input signal.

For example, the signal means 16 could be a low powered laser or a focused beam with a motorised mechanism for pointing the beam at the item 2 to be collected so that it is illuminated with a pattern of red or green light.

In this way, the user may identify himself via a user input. The processor 6 may look up the items waiting for collection by that user, illuminate the items to be collected, and open the barrier so the user can pick up the waiting items. Optionally, the illumination means could be arranged to project onto the respective item information unique to that item. For example, it could project the customer's name or a collection number onto the item.

An array of cameras or illumination means may be arranged to allow the items in the repository to be monitored or illuminated from different angles when several users are present in the repository.

Alternatively or additionally, the signal means 16 may be arranged to provide the identification signal from the app 13a runnning on the portable device 13 carried by the respective user 12.

The app 13a may be arranged to read (e.g. by means of a near field communications facility of the portable device 13) the item identity from the tag 2a when proximate the portable device 13. In this case, the signal means may be arranged to provide the identification signal from the program 13a running on the portable device 13 when the item identity 10 of the item stored in the item memory in association with the respective user is read by the program 13a from the tag 2a. In this way, the user may walk around the repository and receive on his portable device an identification signal that indicates when he is close to the item he is authorised to collect. For example, the program 13a may be arranged to display on the device 13 an indication of where the item is stored ("One collection from Area D"), and then to provide an indication such as by progressively illuminating a coloured bar as the user gets closer to the item (Warm..warmer...hot).

If the user is also provided with an alarm via his portable device 13 to indicate when he has selected and tries to remove the wrong item, this provides a still more reliable way for many users to collect many similar items from a common area without mixing them up.

The surveillance means may arranged to continuously (e.g. periodically and iteratively) monitor the presence of each item in the repository and identify its item identity, e.g. by identifying it as an entity in the image from the camera or cameras and/or by reading the item identity from the tag 2a on the item. Alternatively, the surveillance means may be arranged to identify the item ID 10 of each item only when the item is removed from the repository. This could be achieved for example by arranging the surveillance means to read the item ID 10 from the tag 2a when the item 2 is removed from the repository, in which case the surveillance means could be arranged at an access point (e.g. a doorway) leading from the repository, in the manner of a scanner or the like as used in a conventional retail theft protection system. Advantageously however, by continuously monitoring each item in the repository, a positive confirmation is obtained as to the contents of the repository, so that it is more difficult to circumvent the surveillance system. In addition, positively monitoring the continued presence of each item in the repository can provide an indication of the position of each item in the repository and so makes it easier to provide a signal, for example by selectively illuminating an item, to identify an item to be collected.

An alarm means 15 is arranged to provide an alarm to indicate to the repository staff when an item is removed from the repository. The alarm means 15 may include an audible or visible alarm at the repository or remotely from the repository to alert the repository staff, optionally also nearby customers, to the unauthorised removal of an item from the repository.

Additionally, the alarm means 15 may be configured to provide an alarm from the app 13a runnning on the portable device 13 carried by the user. In this way, a user who is authorised to collect an item, but uncertain as to exactly which item, can be provided with an alarm on their portable device (e.g. a red icon on the screen or a warning sound) to indicate that they have inadvertently removed the wrong item. Optionally, this alarm may be provided as a first stage alarm, with a general alarm to alert staff at the repository being generated only if the user fails to return the item to the repository or to its original position in the repository.

The surveillance means is configured to activate the alarm means to provide the alarm if an item is removed from the repository without a user input being received from the user whose user identity 11 is stored in the item memory in association with the item identity 10 of the respective item. In order to collect an item from the repository, the user simply inputs his user input to the processor 6 (optionally, automatically by the app 13a responsive to the proximity of the user device 13 to the item tag 2a or to the repository). The processor 6 then causes the identification signal to be generated, e.g. via the user device 13 and/or the illumination means, to indicate to the user which item is to be collected. If the item is then removed from the repository, the processor 6 updates the item memory to indicate that the respective item has been collected, and no alarm is issued.

Optionally, in order to ensure that each item is only collected by the authorised user, the processor 6 can determine whether there is a signal from the app 13a indicating the continued proximity of user device 13 to item tag 2a after the item is removed from its position in the repository. Thus even after the correct user input has been received, the alarm may be generated if the app 13a indicates that the item tag 2a is no longer proximate the device 13, for example, as the item tag 2a or device 13 moves through the repository or through a monitored region external but near to the repository, or for a short time period (20 or 30 seconds) after collection.

It will be understood that the item identity 10 may be encoded in any convenient form in the item memory 5 and the tag 2a, either as a single code or as two different codes which are associated in memory or derivable one from the other by an algorithm. In this specification, an item identity is taken to be any and all such codes that serve to identify the same item. Similarly, the user identity 11 may be represented by one or more than one code in any convenient form.

In summary, a method for facilitating the collection of an item by a user comprises:
arranging, in a repository controlled by repository staff, each item of a plurality of items for collection by a respective user from a group of users not including said repository staff, wherein each of the items in the repository is accessible by each of the users;
storing, in an item memory, an item identity of each item in the repository in association with a user identity of a respective one of the users who is authorised to collect the item;
receiving, from each of the items in the repository, a surveillance input signal;
based on the surveillance input signal received from the respective item, identifying:
   - the corresponding item identity stored in the item memory, and
   - an item location of the respective item within the repository;
receiving a user input from a respective one of the users at the repository;
identifying, based on the user input, the user identity of the respective user; and
providing to the respective user an identification signal, wherein the identification signal:
   - identifies a respective one of the items which the user is authorised to collect, and
   - guides the user within the repository to the item location identified from the surveillance input signal; and
providing, to the repository staff, an alarm to indicate when an item is removed from the repository without a user input being received from the user whose user identity is stored in the item memory in association with the respective item.

In a preferred embodiment, pre-purchased items for collection from a retail store are arranged in an open or semi-secure repository monitored by tag readers or cameras which generate an alarm if an item is removed. Each item may be collected by an authorised user who provides an input indicating their presence at the repository, with an identification signal being provided via a directional illumination system or portable user device to identify the item for collection.

Many futher adaptations within the scope of the claims will be evident to those skilled in the art.

## Claims

1. An apparatus for facilitating the collection of an item by a user, comprising:
a repository controlled by repository staff wherein each of a plurality of items may be arranged for collection by a respective user from a group of users not including said repository staff, wherein each of the items in the repository is accessible by each of the users;
an item memory for storing an item identity of each item in the repository in association with a user identity of a respective one of the users who is authorised to collect the item;
a surveillance means;
a signal means arranged to guide the user within the repository to an item location of the respective item within the repository;
an alarm means for providing an alarm to indicate to the repository staff when an item is removed from the repository; and
a user input means for receiving a user input from a user at the repository to identify the user identity of the user;
wherein the surveillance means is configured to activate the alarm means to provide the alarm if an item is removed from the repository without a user input being received from the user whose user identity is stored in the item memory in association with the item identity of the respective item;
wherein the
surveillance means is arranged:
- to receive from each of the items in the repository a surveillance input signal, and
- based on the surveillance input signal received from the respective item, to identify:
- the corresponding item identity stored in the item memory, and
- the item location of the respective item within the repository;
and the signal means is arranged:
- to provide an identification signal to identify to each one of the users a respective one of the items which the user is authorised to collect, and
- to guide the user within the repository to the item location identified from the surveillance input signal;
and wherein the
surveillance means is further arranged, when an item is deposited in the repository by repository staff:
- to receive via a staff input means an input from repository staff indicating or confirming the item identity of the deposited item, and
- to receive from the deposited item an initial surveillance input signal, and
- to associate the item identity of the deposited item with the initial surveillance input signal, and
- to identify the item location of the deposited item within the repository based on the initial surveillance input signal received from the item, and
- to store the item location in association with the item identity in the item memory.

2. An apparatus according to claim 1, wherein the surveillance means is further arranged, after the item is deposited in the repository, to identify the item in the repository by comparing a subsequent surveillance input signal received from the item with the item identity and the item location stored in the memory.

3. An apparatus according to claim 1 or claim 2, wherein the item location of each item is freely selectable by repository staff at any arbitrary spatial location within the repository, and the surveillance means is arranged to define a plurality of item locations in any arbitrary spatial configuration.

4. An apparatus according to claim 1, wherein the surveillance means is arranged to continuously monitor and identify the item identity of each of the items in the repository.

5. An apparatus according to claim 1, wherein the apparatus includes a program, and a respective instance of the program is arranged to run on each of a plurality of portable devices, each portable device being carried by a respective one of the users; and
the signal means is arranged to provide the identification signal from the program runnning on the portable device carried by the respective user.

6. An apparatus according to claim 1, wherein each item is provided with a tag encoded with the item identity, and the surveillance means is arranged to read the item identity from the tag.

7. An apparatus according to claim 6, wherein the apparatus includes a program, and a respective instance of the program is arranged to run on each of a plurality of portable devices, each portable device being carried by a respective one of the users;
and the program is arranged to read the item identity from the tag when proximate the portable device.

8. An apparatus according to claim 7, wherein the signal means is arranged to provide the identification signal from the program running on the portable device carried by the respective user when the item identity of the item stored in the item memory in association with the respective user is read by the program from the tag.

9. An apparatus according to claim 8, wherein the program is arranged to generate the user input when the item identity of the item stored in the item memory in association with the respective user is read by the program from the tag.

10. An apparatus according to claim 1, wherein the surveillance means includes at least one camera and an image processor, and the camera is arranged to receive the surveillance input signal from each item in the repository as an image of the respective item, and to generate a corresponding image output signal, and the image processor is arranged to receive the image output signal from the camera and to associate the item identity of each item in the repository with an entity embodied in the image, and to provide the alarm responsive to a change in the respective entity.

11. An apparatus according to claim 1, wherein the signal means includes an illumination means directable, responsive to the item location based on the surveillance input signal, to selectively illuminate each item to be collected from the repository.

12. An apparatus according to claim 1, wherein at least some of the items in the repository share a common item identity.

13. A method for facilitating the collection of an item by a user, comprising:
arranging, in a repository controlled by repository staff, each item of a plurality of items for collection by a respective user from a group of users not including said repository staff, wherein each of the items in the repository is accessible by each of the users;
storing, in an item memory, an item identity of each item in the repository in association with a user identity of a respective one of the users who is authorised to collect the item;
receiving a user input from a respective one of the users at the repository;
identifying, based on the user input, the user identity of the respective user; and
providing to the respective user an identification signal, wherein the identification signal guides the user within the repository to an item location of the respective item within the repository; and
providing, to the repository staff, an alarm to indicate when an item is removed from the repository without a user input being received from the user whose user identity is stored in the item memory in association with the respective item; and
receiving, from each of the items in the repository, a surveillance input signal;
based on the surveillance input signal received from the respective item, identifying:
- the corresponding item identity stored in the item memory, and
- the item location of the respective item within the repository;
identifying a respective one of the items which the user is authorised to collect, and
guiding the user within the repository to the item location identified from the surveillance input signal;
and, when an item is deposited in the repository by repository staff:
- receiving via a staff input means an input from repository staff indicating or confirming the item identity of the deposited item, and
- receiving from the deposited item an initial surveillance input signal, and
- associating the item identity of the deposited item with the initial surveillance input signal, and
- identifying the item location of the deposited item within the repository based on the initial surveillance input signal received from the item, and
- storing the item location in association with the item identity in the item memory.

## Patentansprüche

1. Einrichtung zum Ermöglichen der Sammlung eines Artikels durch einen Benutzer, die Folgendes umfasst:
ein Lager, das von Lagerpersonal gesteuert wird, wobei jeder einer Vielzahl von Artikeln zur Sammlung durch einen jeweiligen Benutzer einer Gruppe von Benutzern, die das Lagerpersonal nicht beinhalten, angeordnet sein kann, wobei jeder der Benutzer auf jeden Artikel in dem Lager zugreifen kann;
einen Artikelspeicher zum Speichern einer Artikelidentität jedes Artikels im Lager in Verknüpfung mit einer Benutzeridentität eines jeweiligen der Benutzer, der zum Sammeln des Artikels autorisiert ist;
ein Überwachungsmittel;
ein Signalmittel, das angeordnet ist, den Benutzer im Lager zu einem Artikelstandort des jeweiligen Artikels im Lager zu führen;
ein Alarmmittel zum Bereitstellen eines Alarms, um dem Lagerpersonal anzuzeigen, wann ein Artikel aus dem Lager entfernt wird; und
ein Benutzereingabemittel zum Empfangen einer Benutzereingabe von einem Benutzer im Lager, um die Benutzeridentität des Benutzers zu identifizieren;
wobei das Überwachungsmittel dazu ausgelegt ist, das Alarmmittel zu aktivieren, um den Alarm bereitzustellen, wenn ein Artikel aus dem Lager entfernt wird, ohne dass eine Benutzereingabe vom Benutzer empfangen wird, dessen Benutzeridentität im Artikelspeicher in Verknüpfung mit der Artikelidentität des jeweiligen Artikels gespeichert ist;
wobei das Überwachungsmittel zu Folgendem angeordnet ist:
- Empfangen eines Überwachungseingangssignals von jedem der Artikel im Lager, und
- auf Basis des Überwachungseingangssignals, das vom jeweiligen Artikel empfangen wird, Identifizieren von Folgendem:
- der entsprechenden im Artikelspeicher gespeicherten Artikelidentität, und
- dem Artikelstandort des jeweiligen Artikels im Lager;
und das Signalmittel ist zu Folgendem angeordnet:
- Bereitstellen eines Identifikationssignals, um einen jeweiligen der Artikel, zu deren Sammlung der Benutzer autorisiert ist, für jeden der Benutzer zu identifizieren, und
- Führen des Benutzers im Lager zu dem Artikelstandort, der anhand des Überwachungseingangssignals identifiziert wurde;
und wobei das Überwachungsmittel ferner zu Folgendem angeordnet ist, wenn vom Lagerpersonal ein Artikel im Lager abgelegt wird:
- Empfangen einer Eingabe vom Lagerpersonal, die die Artikelidentität des abgelegten Artikels anzeigt oder bestätigt, via ein Personaleingabemittel, und
- Empfangen eines anfänglichen Überwachungseingangssignals vom abgelegten Artikel, und
- Verknüpfen der Artikelidentität des abgelegten Artikels mit dem anfänglichen Überwachungseingangssignal, und
- Identifizieren des Artikelstandorts des abgelegten Artikels im Lager auf Basis des anfänglichen Überwachungseingangssignals, das vom Artikel empfangen wird, und
- Speichern des Artikelstandorts in Verknüpfung mit der Artikelidentität im Artikelspeicher.

2. Einrichtung nach Anspruch 1, wobei das Überwachungsmittel ferner angeordnet ist, nachdem der Artikel im Lager abgelegt wurde, durch Vergleichen eines nachfolgenden Überwachungseingangssignals, das vom Artikel empfangen wird, mit der Artikelidentität und dem Artikelstandort, die im Speicher gespeichert sind, den Artikel im Lager zu identifizieren.

3. Einrichtung nach Anspruch 1 oder Anspruch 2, wobei der Artikelstandort von jedem Artikel vom Lagerpersonal an einem willkürlichen räumlichen Standort im Lager frei auswählbar ist und das Überwachungsmittel angeordnet ist, eine Vielzahl von Artikelstandorten in einer willkürlichen räumlichen Auslegung zu definieren.

4. Einrichtung nach Anspruch 1, wobei das Überwachungsmittel angeordnet ist, die Artikelidentität von jedem der Artikel im Lager kontinuierlich zu überwachen und zu identifizieren.

5. Einrichtung nach Anspruch 1, wobei die Einrichtung ein Programm beinhaltet und eine jeweilige Instanz des Programms angeordnet ist, auf jeder einer Vielzahl von tragbaren Vorrichtungen zu laufen, wobei jede tragbare Vorrichtung von einem jeweiligen der Benutzer getragen wird; und
das Signalmittel ist angeordnet, das Identifikationssignal vom Programm bereitzustellen, das auf der tragbaren Vorrichtung läuft, die vom jeweiligen Benutzer getragen wird.

6. Einrichtung nach Anspruch 1, wobei jeder Artikel mit einem Tag versehen ist, das mit der Artikelidentität codiert ist, und das Überwachungsmittel angeordnet ist, die Artikelidentität vom Tag auszulesen.

7. Einrichtung nach Anspruch 6, wobei die Einrichtung ein Programm beinhaltet und eine jeweilige Instanz des Programms angeordnet ist, auf jeder einer Vielzahl von tragbaren Vorrichtungen zu laufen, wobei jede tragbare Vorrichtung von einem jeweiligen der Benutzer getragen wird;
und das Programm ist angeordnet, die Artikelidentität vom Tag auszulesen, wenn es sich in der Nähe der tragbaren Vorrichtung befindet.

8. Einrichtung nach Anspruch 7, wobei das Signalmittel angeordnet ist, das Identifikationssignal aus dem Programm bereitzustellen, das auf der tragbaren Vorrichtung läuft, die vom jeweiligen Benutzer getragen wird, wenn die Artikelidentität des Artikels, die im Artikelspeicher in Verknüpfung mit dem jeweiligen Benutzer gespeichert ist, vom Programm vom Tag ausgelesen wird.

9. Einrichtung nach Anspruch 8, wobei das Programm angeordnet ist, die Benutzereingabe zu erzeugen, wenn die Artikelidentität des Artikels, die im Artikelspeicher in Verknüpfung mit dem jeweiligen Benutzer gespeichert ist, vom Programm vom Tag ausgelesen wird.

10. Einrichtung nach Anspruch 1, wobei das Überwachungsmittel mindestens eine Kamera und einen Bildprozessor beinhaltet, und die Kamera angeordnet ist, das Überwachungseingangssignal von jedem Artikel im Lager als Bild des jeweiligen Artikels zu empfangen und ein entsprechendes Bildausgangssignal zu erzeugen, und der Bildprozessor angeordnet ist, das Bildausgangssignal von der Kamera zu empfangen und die Artikelidentität jedes Artikels im Lager mit einer Entität zu verknüpfen, die im Bild verkörpert ist, und in Reaktion auf eine Änderung in der jeweiligen Entität den Alarm bereitzustellen.

11. Einrichtung nach Anspruch 1, wobei das Signalmittel ein Beleuchtungsmittel beinhaltet, das in Reaktion auf den Artikelstandort auf Basis des Überwachungseingangssignals gerichtet werden kann, um jeden im Lager zu sammelnden Artikel selektiv zu beleuchten.

12. Einrichtung nach Anspruch 1, wobei mindestens einige der Artikel im Lager eine gemeinsame Artikelidentität aufweisen.

13. Verfahren zum Ermöglichen der Sammlung eines Artikels durch einen Benutzer, das Folgendes umfasst:
Anordnen jedes Artikels einer Vielzahl von Artikeln zur Sammlung durch einen jeweiligen Benutzer einer Gruppe von Benutzern, die das Lagerpersonal nicht beinhalten, in einem Lager, das von Lagerpersonal gesteuert wird, wobei jeder der Benutzer auf jeden Artikel in dem Lager zugreifen kann;
Speichern einer Artikelidentität jedes Artikels im Lager in Verknüpfung mit einer Benutzeridentität eines jeweiligen der Benutzer, der zum Sammeln des Artikels autorisiert ist, in einem Artikelspeicher;
Empfangen einer Benutzereingabe von einem jeweiligen der Benutzer im Lager;
Identifizieren der Benutzeridentität des jeweiligen Benutzers auf Basis der Benutzereingabe; und
Bereitstellen eines Identifikationssignals für den jeweiligen Benutzer, wobei das Identifikationssignal den Benutzer im Lager zu einem Artikelstandort des jeweiligen Artikels im Lager führt; und
Bereitstellen eines Alarms für das Lagerpersonal, um anzuzeigen, wann ein Artikel aus dem Lager entfernt wird, ohne dass eine Benutzereingabe vom Benutzer empfangen wird, dessen Benutzeridentität in Verknüpfung mit dem jeweiligen Artikel im Artikelspeicher gespeichert ist; und
Empfangen eines Überwachungseingangssignals von jedem der Artikel im Lager;
auf Basis des Überwachungseingangssignals, das vom jeweiligen Artikel empfangen wird, Identifizieren von Folgendem:
- der entsprechenden im Artikelspeicher gespeicherten Artikelidentität, und
- dem Artikelstandort des jeweiligen Artikels im Lager;
Identifizieren eines jeweiligen der Artikel, zu deren Sammlung der Benutzer autorisiert ist, und
Führen des Benutzers im Lager zu dem Artikelstandort, der anhand des Überwachungseingangssignals identifiziert wurde;
und, wenn vom Lagerpersonal ein Artikel im Lager abgelegt wird:
- Empfangen einer Eingabe vom Lagerpersonal, die die Artikelidentität des abgelegten Artikels anzeigt oder bestätigt, via ein Personaleingabemittel, und
- Empfangen eines anfänglichen Überwachungseingangssignals vom abgelegten Artikel, und
- Verknüpfen der Artikelidentität des abgelegten Artikels mit dem anfänglichen Überwachungseingangssignal, und
- Identifizieren des Artikelstandorts des abgelegten Artikels im Lager auf Basis des anfänglichen Überwachungseingangssignals, das vom Artikel empfangen wird, und
- Speichern des Artikelstandorts in Verknüpfung mit der Artikelidentität im Artikelspeicher.

## Revendications

1. Appareil destiné à faciliter la collecte d'un article par un utilisateur, comprenant :
un dépôt commandé par un personnel de dépôt, dans lequel chacun d'une pluralité d'articles peut être agencé pour sa collecte par un utilisateur respectif d'un groupe d'utilisateurs n'incluant pas ledit personnel de dépôt, dans lequel chacun des articles dans le dépôt est accessible à chacun des utilisateurs ;
une mémoire d'articles pour stocker une identité d'article de chaque article dans le dépôt en association avec une identité d'utilisateur d'un utilisateur respectif des utilisateurs qui est autorisé à collecter l'article ;
un moyen de surveillance ;
un moyen de signal agencé pour guider l'utilisateur à l'intérieur du dépôt jusqu'à un emplacement d'article de l'article respectif à l'intérieur du dépôt ;
un moyen d'alarme pour fournir une alarme pour indiquer au personnel de dépôt qu'un article a été retiré du dépôt ; et
un moyen d'entrée utilisateur pour recevoir une entrée utilisateur d'un utilisateur au niveau du dépôt afin d'identifier l'identité d'utilisateur de l'utilisateur ;
dans lequel le moyen de surveillance est configuré pour activer le moyen d'alarme pour fournir l'alarme si un article a été retiré du dépôt sans qu'une entrée utilisateur n'ait été reçue de l'utilisateur dont l'identité d'utilisateur est stockée dans la mémoire d'articles en association avec l'identité d'article de l'article respectif ;
dans lequel le moyen de surveillance est agencé :
- pour recevoir un signal d'entrée de surveillance de chacun des articles dans le dépôt, et
- sur la base du signal d'entrée de surveillance reçu de l'article respectif, pour identifier :
- l'identité d'article correspondante stockée dans la mémoire d'articles, et
- l'emplacement d'article de l'article respectif à l'intérieur du dépôt ; et
le moyen de signal est agencé :
- pour fournir un signal d'identification afin d'identifier, pour chacun des utilisateurs, un article respectif des articles que l'utilisateur est autorisé à collecter, et
- pour guider l'utilisateur à l'intérieur du dépôt jusqu'à l'emplacement d'article identifié à partir du signal d'entrée de surveillance ;
et dans lequel le moyen de surveillance est en outre agencé, lorsqu'un article est déposé dans le dépôt par personnel de dépôt :
- pour recevoir, via un moyen d'entrée de personnel, une entrée du personnel de dépôt indiquant ou confirmant l'identité d'article de l'article déposé, et
- pour recevoir un signal d'entrée de surveillance initial de l'article déposé, et
- pour associer l'identité d'article de l'article déposé au signal d'entrée de surveillance initial, et
- pour identifier l'emplacement d'article de l'article déposé à l'intérieur du dépôt sur la base du signal d'entrée de surveillance initial reçu de l'article, et
- pour stocker l'emplacement d'article en association avec l'identité d'article dans la mémoire d'articles.

2. Appareil selon la revendication 1, dans lequel le moyen de surveillance est en outre agencé, après que l'article a été déposé dans le dépôt, pour identifier l'article dans le dépôt en comparant un signal d'entrée de surveillance ultérieur reçu de l'article avec l'identité d'article et l'emplacement d'article stockés dans la mémoire.

3. Appareil selon la revendication 1 ou la revendication 2, dans lequel l'emplacement d'article de chaque article peut être sélectionné librement par le personnel de dépôt à n'importe quel emplacement spatial arbitraire à l'intérieur du dépôt, et le moyen de surveillance est agencé pour définir une pluralité d'emplacements d'articles dans n'importe quelle configuration spatiale arbitraire.

4. Appareil selon la revendication 1, dans lequel le moyen de surveillance est agencé pour contrôler et identifier en permanence l'identité d'article de chacun des articles dans le dépôt.

5. Appareil selon la revendication 1, dans lequel l'appareil comporte un programme, et une instance respective du programme est agencée pour s'exécuter sur chacun d'une pluralité de dispositifs portables, chaque dispositif portable étant porté par un utilisateur respectif des utilisateurs ; et
le moyen de signal est agencé pour fournir le signal d'identification provenant du programme s'exécutant sur le dispositif portable porté par l'utilisateur respectif.

6. Appareil selon la revendication 1, dans lequel chaque article est pourvu d'une étiquette codée avec l'identité d'article, et le moyen de surveillance est agencé pour lire l'identité d'article sur l'étiquette.

7. Appareil selon la revendication 6, dans lequel l'appareil comporte un programme, et une instance respective du programme est agencée pour s'exécuter sur chacun d'une pluralité de dispositifs portables, chaque dispositif portable étant porté par un utilisateur respectif des utilisateurs ;
et le programme est agencé pour lire l'identité d'article sur l'étiquette à proximité du dispositif portable.

8. Appareil selon la revendication 7, dans lequel le moyen de signal est agencé pour fournir le signal d'identification provenant du programme s'exécutant sur le dispositif portable porté par l'utilisateur respectif lorsque l'identité d'article de l'article stockée dans la mémoire d'articles en association avec l'utilisateur respectif est lue par le programme sur l'étiquette.

9. Appareil selon la revendication 8, dans lequel le programme est agencé pour générer l'entrée utilisateur lorsque l'identité d'article de l'article stockée dans la mémoire d'articles en association avec l'utilisateur est lue par le programme sur l'étiquette.

10. Appareil selon la revendication 1, dans lequel le moyen de surveillance comporte au moins une caméra et un processeur d'images, et la caméra est agencée pour recevoir le signal d'entrée de surveillance de chaque article dans le dépôt en tant qu'image de l'article respectif, et pour générer un signal de sortie d'image correspondant, et le processeur d'images est agencé pour recevoir le signal de sortie d'image de la caméra et pour associer l'identité d'article de chaque article dans le dépôt à une entité incorporée dans l'image, et pour fournir l'alarme en réponse à un changement dans l'entité respective.

11. Appareil selon la revendication 1, dans lequel le moyen de signal comporte un moyen d'éclairage pouvant être dirigé selon l'emplacement de l'article sur la base du signal d'entrée de surveillance, pour éclairer sélectivement chaque article à collecter dans le dépôt.

12. Appareil selon la revendication 1, dans lequel au moins certains des articles dans le dépôt partagent une identité d'article commune.

13. Procédé destiné à faciliter la collecte d'un article par un utilisateur, comprenant :
l'agencement, dans un dépôt commandé par un personnel de dépôt, de chacun d'une pluralité d'articles pour sa collecte par un utilisateur respectif d'un groupe d'utilisateurs n'incluant pas ledit personnel de dépôt, dans lequel chacun des articles dans le dépôt est accessible à chacun des utilisateurs ;
le stockage, dans une mémoire d'articles, d'une identité d'article de chaque article dans le dépôt en association avec une identité d'utilisateur d'un utilisateur respectif des utilisateurs qui est autorisé à collecter l'article ;
la réception d'une entrée utilisateur d'un utilisateur respectif des utilisateurs au niveau du dépôt ;
l'identification, sur la base de l'entrée utilisateur, de l'identité d'utilisateur de l'utilisateur respectif ; et
la fourniture à l'utilisateur respectif d'un signal d'identification, dans lequel le signal d'identification guide l'utilisateur à l'intérieur du dépôt jusqu'à un emplacement d'article de l'article respectif à l'intérieur du dépôt ; et
la fourniture d'une alarme au personnel de dépôt pour indiquer qu'un article a été retiré du dépôt sans qu'une entrée utilisateur n'ait été reçue de l'utilisateur dont l'identité d'utilisateur est stockée dans la mémoire d'articles en association avec l'article respectif ; et
la réception d'un signal d'entrée de surveillance de chacun des articles dans le dépôt ;
sur la base du signal d'entrée de surveillance reçu de l'article respectif, l'indentification de :
- l'identité d'article correspondante stockée dans la mémoire d'articles, et
- l'emplacement d'article de l'article respectif à l'intérieur du dépôt ;
l'indentification d'un article respectif des articles que l'utilisateur est autorisé à collecter, et
le guidage de l'utilisateur à l'intérieur du dépôt jusqu'à l'emplacement d'article identifié à partir du signal d'entrée de surveillance ;
et, lorsqu'un article est déposé dans le dépôt par personnel de dépôt :
- la réception, via un moyen d'entrée de personnel, d'une entrée du personnel de dépôt indiquant ou confirmant l'identité d'article de l'article déposé, et
- la réception d'un signal d'entrée de surveillance initial de l'article déposé, et
- l'association de l'identité d'article de l'article déposé au signal d'entrée de surveillance initial, et
- l'indentification de l'emplacement d'article de l'article déposé à l'intérieur du dépôt sur la base du signal d'entrée de surveillance initial reçu de l'article, et
- le stockage de l'emplacement d'article en association avec l'identité d'article dans la mémoire d'articles.
